# EUROPÄISCHE PATENTSCHRIFT

(11) **EP 2 835 499 B1**
(45) Veröffentlichungstag und Bekanntmachung des Hinweises auf die Patenterteilung: **09.10.2019**
(21) Anmeldenummer: 13179349.9
(22) Anmeldetag: 06.08.2013
(51) Int. Cl.: F01D 5/14

(54) **Schaufelgitter und zugehörige Strömungsmaschine**
Blade row and corresponding flow machine
Grille d'aubes et turbomachine associée

(43) Veröffentlichungstag der Anmeldung: 11.02.2015
(73) Patentinhaber: MTU Aero Engines AG, 80995 München (DE)
(72) Erfinder: Gier, Jochen, 85757 Karlsfeld (DE); Gündogdu, Yavuz, 80809 München (DE); Karl, Engel, 85221 Dachau (DE)

(56) Entgegenhaltungen:
- EP-A1- 2 261 462
- EP-A2- 2 589 752
- JP-A- 2009 209 745

## Beschreibung

Die Erfindung betrifft ein Schaufelgitter einer Strömungsmaschine nach dem Oberbegriff des Patentanspruchs 1 und eine Strömungsmaschine mit einem derartigen Schaufelgitter.

Eine durch einen Strömungskanal geführte Primär- bzw. Hauptströmung wird durch einen seitlichen Druckgradienten parallel zur Begrenzungswand abgelenkt. Da wandnahe Strömungsschichten aufgrund ihrer geringeren Geschwindigkeit stärker als wandferne Strömungsschichten abgelenkt werden, wird eine Sekundärströmung bzw. ein Kanalwirbel gebildet, die der Hauptströmung überlagert ist, was unter anderem zu Druckverlusten führt. Derartige Sekundärströmungen treten regelmäßig in Schaufelgittern von Strömungsmaschinen wie Gas- und Dampfturbinen auf. Die Schaufelgitter bestehen aus einer Vielzahl von in Umfangsrichtung nebeneinander angeordneten Schaufeln bzw. Schaufelblättern, die in einem rotationssymmetrischen Strömungskanal angeordnet sind und zwischen denen jeweils ein Schaufelkanal ausgebildet ist. Die Schaufelkanäle sind in Radialrichtung jeweils von einer radial äußeren gehäuseseitigen Seitenwandung und von einer radial inneren narbenseitigen Seitenwandung begrenzt. Die Seitenwandungen sind beispielsweise feststehende Gehäuseabschnitt, Rotorabschnitte, radial innere Schaufelplattformen und/oder radial äußere Schaufeldeckplatten. In Umfangsrichtung werden die Schaufelkanäle jeweils von einer druckseitigen und einer saugseitigen Schaufelblattwandung begrenzt. Zur Verringerung der Sekundärströmungen werden in die Seitenwandungen häufig Konturierungen in Form von Erhebungen und/oder Senken eingebracht. Beispiele für derartige, insbesondere nichtumfangssymmetrische Seitenwandkonturierungen, sind in der europäischen Patentanmeldung EP 2 261 462 A1, die die Merkmale des Oberbegriffs von Anspruch 1 aufweist, und in der internationalen Patentanmeldung WO 98/44240 A1 gezeigt.

Aufgabe der Erfindung ist es, ein Schaufelgitter einer Strömungsmaschine mit einer reduzierten Sekundärströmung, sowie eine Strömungsmaschine mit einem verbesserten Wirkungsgrad zu schaffen.

Diese Aufgabe wird gelöst durch ein Schaufelgitter einer Strömungsmaschine mit den Merkmalen des Patentanspruchs 1 und durch eine Strömungsmaschine mit den Merkmalen des Patentanspruchs 9.

Ein erfindungsgemäßes Schaufelgitter einer Strömungsmaschine hat eine Vielzahl von Schaufelkanälen, die in Umfangsrichtung jeweils von einer Druckseite eines Schaufelblattes und von einer gegenüberliegenden Saugseite eines benachbarten Schaufelblattes begrenzt sind. In Radialrichtung sind die Schaufelkanäle jeweils von zwei gegenüberliegenden Seitenwandungen begrenzt. Zumindest jeweils eine Seitenwandung der Schaufelkanäle ist mit einer Seitenwandkonturierung versehen. Erfindungsgemäß ist die Seitenwandkonturierung in Umfangsrichtung wellenartig und hat zumindest zwei Erhebungen und zumindest eine Senke oder zumindest zwei Senken und zumindest eine Erhebung.

Die erfindungsgemäße Seitenwandkonturierung bewirkt eine Reduzierung von Sekundärströmungswirbeln und eine Verringerung von Abweichungen eines Abströmwinkels aus dem Schaufelgitter im seitenwandnahen Bereich. Die zumindest eine Seitenwandkonturierung erlaubt primäre Druckgradienten, insbesondere die in Umfangsrichtung wirkenden Druckgradienten, gezielt durch die Wellenförmigkeit günstig zu beeinflussen. Zudem erlaubt die zumindest eine Seitenwandkonturierung den Abströmwinkel durch das Formen von zumindest einer in Primärströmungsrichtung bzw. Hauptstromrichtung verlaufenden Erhebung und zumindest einer in Primärströmungsrichtung verlaufenden Senke im jeweils beispielsweise hinteren Bereich der Seitenwandung in der Nähe der Seitenwandung derart zu beeinflussen und einzustellen, dass ein Folgegitter eine günstigere Zuströmverteilung erfährt und dadurch dort geringere Strömungsverluste verursacht werden. Zusätzlich wird erreicht, dass eine Interaktion von an der Schaufelvorderkante induzierten Hufeisenwirbeln miteinander und mit einem Kanalwirbel verhindert oder zumindest reduziert wird.

Bevorzugterweise ist die Seitenwandkonturierung bis zum stromabwärtigen Seitenwandrand und somit bis zum hinteren Axialspalt geführt. Hierdurch wird ebenfalls der stromabwärtige Seitenwandrand wellenartig ausgeführt. Dabei können die Erhebungen und die zumindest eine Senke oder die Senken und die zumindest eine Erhebung einzeln bis zum stromabwärtigen Seitenwandrand geführt sein. Beginnen kann die Seitenwandkonturierung am stromaufwärtigen Seitenwandrand, wodurch ebenfalls der stromabwärtige Seitenwandrand wellenartig ausgeführt sein kann, so dass ebenfalls der stromaufwärtige Seitenwandrand wellenartig ausgeführt ist. Grundsätzlich kann sich die Seitenwandkonturierung über Vorderkanten und Hinterkanten der Schaufelblätter hinaus erstrecken.

Alternativ oder zusätzlich können zur Strömungsbeeinflussung die Erhebungen und die zumindest eine Senke oder die Senken und die zumindest eine Erhebung in Umfangsrichtung variierende Breiten und/oder in Strömungsrichtung unterschiedliche Längen haben.

Um einen Abströmwinkel in Seitenwandnähe auszurichten kann es vorteilhaft sein, hinter einer Engstelle zwischen den Schaufeln die Erhebungen und die zumindest eine Senke oder die Senken und die zumindest eine Erhebung normal zu dieser, das heißt insbesondere in einem Winkel von 85°bis 95°, auszuführen.

Zudem kann es bei mehreren Senken vorteilhaft sein, wenn mehrere Senken in eine Senke übergehen. Alternativ kann sich eine Senke in mehrere Senken unterteilen.

Die Erhebungen und die zumindest eine Senke oder die Senken und die zumindest eine Erhebung können in Strömungsrichtung variierende Amplituden haben. Hierdurch haben die Erhebungen und die Senken in Strömungsrichtung unterschiedliche Höhen bzw. Tiefen. Bevorzugterweise betragen die Amplituden der Erhebungen und der Senken maximal 30% der Schaufelteilung.

Gemäß Anspruch 1 lässt sich die Strömung zudem beeinflussen, wenn die Amplituden der Erhebungen untereinander oder die Amplituden der Senken in Strömungsrichtung und/oder Umfangsrichtung untereinander unterschiedlich sind. Beispielsweise kann eine druckseitennahe Erhebung eine größere Amplitude als eine druckseitenferne Schaufelblattwandung haben. Zudem kann die Erhebung glatt, also stufenlos und knicklos sein, und somit sanft in die saugseitige Schaufelblattwandung übergehen. Erfindungsgemäß hat eine saugseitennahe Senke eine größere Amplitude als eine saugseitenferne Senke.

Ferner kann es zur Strömungsbeeinflussung vorteilhaft sein, wenn Krümmungsradien der Seitenwandkonturierung variieren. Bevorzugterweise hat eine Erhebung einen kleineren Krümmungsradius als eine benachbarte Senke.

Eine erfindungsgemäße Strömungsmaschine hat zumindest ein erfindungsgemäßes Schaufelgitter. Aufgrund von reduzierten Sekundärströmungen und einer gleichzeitig stärkeren Ausrichtung des jeweiligen Abströmwinkels der Primärströmung in eine Sollrichtung, ohne dass scharfe Kanten zusätzliche Wirbel und damit Mischungsverluste induzieren, zeichnet sich eine derartige Strömungsmaschine durch einen verbesserten Wirkungsgrad aus.

Sonstige vorteilhafte Ausführungsbeispiele der Erfindung sind Gegenstand weiterer Unteransprüche.

Im Folgenden werden bevorzugte Ausführungsbeispiele der Erfindung anhand stark vereinfachter schematischer Darstellungen näher erläutert. Es zeigen:
- Fig. 1: eine perspektivische Vorderansicht eines Schaufelkanals eines ersten Ausführungsbeispiels eines erfindungsgemäßen Schaufelgitters,
- Fig. 2: einen Schaufelkanal eines zweiten Ausführungsbeispiels des Schaufelgitters,
- Fig. 3: einen Schnitt entlang der Linie A-A durch den Schaufelkanal aus Figur 2,
- Fig. 4: einen Schaufelkanal eines dritten Ausführungsbeispiels des Schaufelgitters, und
- Fig. 5: einen Schaufelkanal eines vierten Ausführungsbeispiels des Schaufelgitters.

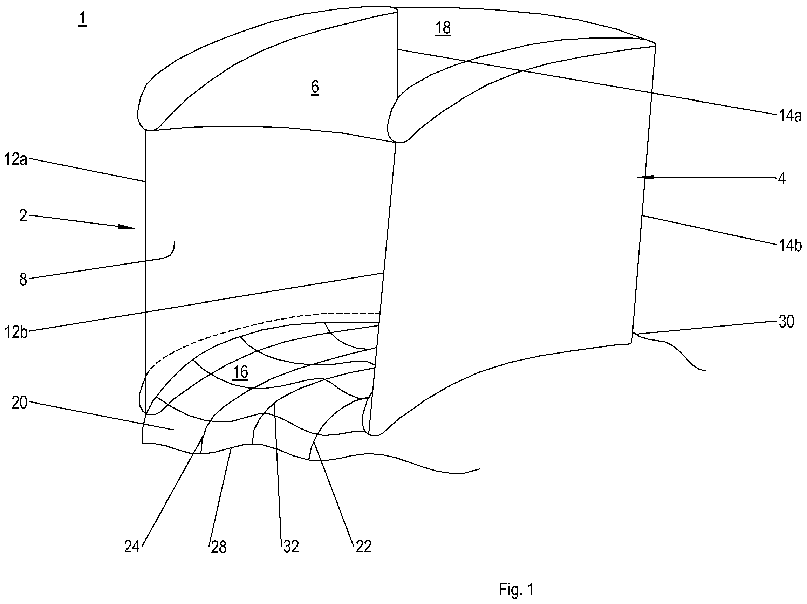

Figur 1 zeigt eine perspektivische Vorderansicht eines Schaufelkanals eines ersten Ausführungsbeispiels eines erfindungsgemäßen Schaufelgitters 1 einer axialen Strömungsmaschine wie eine stationäre Gasturbine oder ein Flugzeugtriebwerk.

Das Schaufelgitter 1 ist bevorzugterweise turbinenseitig angeordnet und hat eine Vielzahl von Schaufelblättern 2, 4, die in Umfangsrichtung der Strömungsmaschine nebeneinander angeordnet sind und jeweils einen Schaufelkanal 6 begrenzen, der gemäß der Darstellung in Figur 1 von vorne nach hinten bzw. von links nach rechts von einer Hauptströmung durchströmt wird. In Umfangsrichtung der Strömungsmaschine bzw. des Schaufelgitters 1 wird der Schaufelkanal 6 von einer druckseitigen Wandung bzw. Druckseite 8 des ersten Schaufelblattes 2 und von einer gegenüberliegenden saugseitigen Wandung bzw. Saugseite 10 des zweiten Schaufelblattes 4 begrenzt. Die Saugseite 10 ist aufgrund der Perspektive in Figur 1 nicht sichtbar. Die Druckseite 8 und die Saugseite 10 erstrecken sich jeweils zwischen einer Vorderkante 12a, 12b und einer Hinterkante 14a, 14b der Schaufelblätter 2, 4. Der Schaufelkanal 6 wird in Radialrichtung des Schaufelgitters 1 von einer nabenseitigen bzw. radial inneren Seitenwandung 16 begrenzt. Zudem wird der Schaufelkanal 6 in Radialrichtung von einer gehäuseseitigen bzw. radial äußeren Seitenwandung 18 begrenzt. Die innere Seitenwandung 16 wird beispielsweise von einem Rotorabschnitt oder einer Schaufelplattform gebildet. Die äußere Seitenwandung 18 wird bspw. von einem Gehäuseabschnitt oder einem Schaufeldeckband gebildet.

Erfindungsgemäß ist zumindest die innere Seitenwandungen 16 im Bereich des Schaufelkanals 6 mit einer nicht-umfangssymmetrischen und in Umfangsrichtung wellenartigen Seitenwandkonturierung versehen. Allerdings kann auch nur zumindest die äußere Seitenwandung im Bereich des Schaufelkanals 6 mit einer nicht-umfangssymmetrischen und in Umfangsrichtung wellenartigen Seitenwandkonturierung versehen sein. In dem in Figur 1 gezeigten Ausführungsbeispiel hat die Seitenwandkonturierung vier Einzelkonturierungen 20, 22, 24, 32 in Form einer druckseitigen Erhebung 20, von zwei Senken 22, 24 und von einer zwischen den Senken angeordneten Erhebung 32.

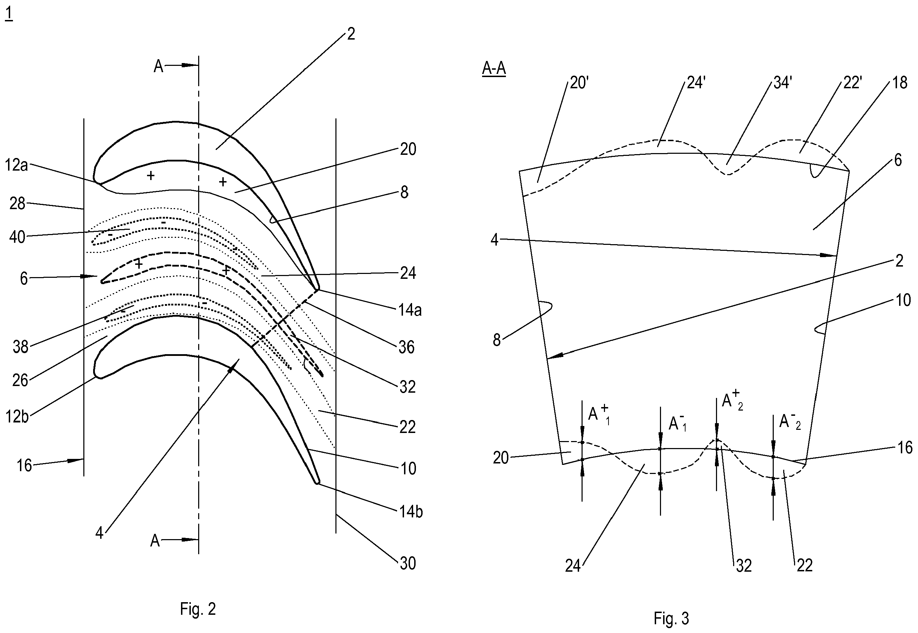

Die Erhebungen 20, 32 und die Senken 22, 24 beziehen sich jeweils auf einen nicht-konturierten Flächenabschnitt 26 der inneren Seitenwandung 16 (s. bspw. Figur 2). Die Erhebungen 20, 32 erstrecken sich vom nicht-konturierten Flächenabschnitt 26 radial nach außen und stellen somit eine Kanaleinschnürung dar. Die Senken 22, 24 erstrecken sich vom nicht-konturierten Flächenabschnitt 26 radial nach innen und stellen somit eine Kanalerweiterung dar.

Die Seitenwandkonturierung verläuft über die gesamte Erstreckung der inneren Seitenwandung 16 und somit über die Vorderkanten 12a, 12b und die Hinterkanten 14a, 14b hinaus. Die Seitenwandkonturierung 16 bzw. deren beiden Senken 22, 24 und die Erhebungen 20, 32 erstreckt sich somit von einem vorderen Seitenwandrand 28 bis zu einem hinteren Seitenwandrand 30, die folglich ebenfalls wellenförmig ausgebildet sind.

Die druckseitige Erhebung 20 läuft entlang der Druckseite 8 des einen Schaufelblattes 2 von der Vorderkante 12a bis zur Hinterkante 14a und geht glatt in die Druckseite 8 über.

In dem in Figur 1 gezeigten Ausführungsbeispiel ist die zweite Erhebung 32 mittig zwischen den Senken 22, 24 angeordnet. Die Erhebung 32 wird somit von den Senken 22, 24 flankiert, die unmittelbar in die Erhebung 20 und in die Druckseite 8 bzw. die Saugseite 10 übergehen. Die Erhebung 32 und die Senken 22, 24 verlaufen in Strömungsrichtung und sind somit entsprechend der Druckseite 8 und der Saugseite 10 bogenförmig ausgebildet.

Die Erhebungen 20, 32 und die Senken 22, 24 können grundsätzlich unterschiedliche oder gleiche Amplituden in Umfangsrichtung und in Strömungsrichtung haben. Bevorzugterweise beträgt eine maximale Amplitude der Erhebungen 20, 32 oder der Senken 22, 24 maximal 30% einer Schaufelteilung des Schaufelgitters 1.

In den Figuren 2 und 3 ist ein Schaufelkanal 6 eines Schaufelgitters 1 ähnlich Figur 1 gezeigt, allerdings ist eine Druckseitenanbindung einer druckseitigen Erhebung 20 anders und zwar nicht glatt wie in Figur 1, sondern orthogonal.

Wie in Figur 2 gezeigt, ist die innere Seitenwandung 16 im Bereich des Schaufelkanals 6 mit einer nicht-umfangssymmetrischen und in Umfangsrichtung wellenartigen Seitenwandkonturierung versehen. Die Seitenwandkonturierung hat vier Einzelkonturierungen 20, 22, 24, 32 in Form von zwei Erhebungen 20, 32 und zwei Senken 22, 24. Die Einzelkonturierungen 20, 22, 24, 32 sind zeichnerisch durch Höhen- bzw. Tiefenlinien mit einem Pluszeichen als Kanaleinschnürung (Erhebung) oder mit einem Minuszeichen als Kanalerweiterung (Senke) dargestellt.

Wie in Figur 3 durch die gestrichelte Linie im Bereich der äußeren Seitenwand 18 angedeutet, ist diese ebenfalls mit einer nicht-umfangssymmetrischen und in Umfangsrichtung betrachtet wellenartigen Seitenwandkonturierung versehen sein, die aus einer Vielzahl von Einzelkonturierungen 20', 32' und 22', 24' besteht. Die inneren und äußeren Seitenwandkonturierungen 16, 18 können gleich oder unterschiedlich ausgebildet sein. Zudem kann lediglich die äußere Seitenwandung 18 mit einer nicht-umfangsymmetrischen Seitenwandkonturierung versehen sein.

Im Folgenden wird die innere Seitenwandkonturierung im Detail erläutert.

Wie in Figur 2 gezeigt, erstreckt sich die erste Erhebung 20 bzw. die druckseitige Erhebung entlang der Druckseite 8 von der Vorderkante 12a bis zur Hinterkante 14a. Dabei geht sie orthogonal in die Druckseite 8 über.

Die zweite Erhebung 32 bzw. mittlere Erhebung ist etwa mittig zwischen den Schaufelblättern 2, 4 angeordnet. Sie erstreckt sich von einer axialen Position der Vorderkanten 12a, 12b über eine Engstelle 36 zwischen den Schaufelblättern 2,4 hinaus bis zu einer axialen Position der Hinterkanten 14a, 14b.

Die erste Senke 22 bzw. die saugseitige Senke ist nahe der Saugseite 10 angeordnet. Sie erstreckt sich in Strömungsrichtung über die gesamte Seitenwandung 16 vom vorderen Seitenwandrand 28 bis zum hinteren Seitenwandrand 30. Sie ist im Bereich der Vorderkante 12b und der Hinterkante 14b von dem Schaufelblatt 4 über einen nicht-konturierten Flächenabschnitt 26 beabstandet, geht jedoch in einem Schaufelblattbereich, der etwa einer 40% axialen Erstreckung des Schaufelblattes 4 entspricht, nahezu unmittelbar in die Saugseite 10 über.

Die zweite Senke 24 bzw. druckseitige Senke erstreckt sich in Strömungsrichtung über die gesamte Seitenwandung 16 vom vorderen Seitenwandrand 28 bis zum hinteren Seitenwandrand 30. In einem vorderen Bereich des Schaufelkanals 6 ist die druckseitige Senke 24 etwa mittig zwischen den Erhebungen 20, 32 positioniert. In einem hinteren Bereich des Schaufelkanals 6 ist die druckseitige Senke 24 nahe der mittleren Erhebung 32 und fern der druckseitigen Erhebung 20 positioniert.

In Umfangrichtung sind die Senken 22, 24 von den Erhebung 20, 32 über ihre gesamte Länge über jeweils einen nicht-konturierten Flächenabschnitt 26 beabstandet. Sie haben jeweils einen tiefsten Abschnitt 38, 40, die sich in etwa von einer axialen Position der Vorderkanten 12a, 12b bis zu einer axialen Position erstrecken, die etwa 70% bis 80% einer axialen Schaufelbreite entspricht.

Um einen Abströmwinkel in Seitenwandnähe positiv zu beeinflussen, sind die mittlere Erhebung 32 und die Senken 22, 24 hinter der Engstelle 36 normal zu dieser, d.h. in einem Winkel von 85° bis 95°, orientiert.

Wie in Figur 2 ferner gezeigt, haben die Erhebungen 20, 32 und Senken 22, 24 in Strömungsrichtung unterschiedliche Breiten. So haben die Erhebungen 20, 32 und Senken 22, 24 in einer Position, die etwa 50% einer axialen Schaufelbreite entspricht, ihre größte Breite und am vorderen Schaufelwandrand 28 und hinteren Schaufelwandrand 30 eine geringe Breite.

Wie anhand des Schnittes in Figur 3 gezeigt, hat die druckseitige Erhebung 20 in Umfangsrichtung eine Amplitude A⁺₁, die mittlere Erhebung 32 eine Amplitude A⁺₂, die druckseitige Senke 24 eine Amplitude A⁻₁ und die saugseitige Senke 22 eine Amplitude A⁻₂. In Axialrichtung können die Amplituden A⁺₁, A⁺₂, A⁻₁ und A⁻₁ jeweils variieren.

In dem gezeigten Ausführungsbeispiel ist die Amplitude A⁺₁ der druckseitigen bzw. druckseitennahen Erhebung 20 größer als die Amplitude A⁺₂ der druckseitenfernen mittleren Erhebung 32. Wie des Weiteren in Figur 3 zu erkennen, geht die druckseitennahe Erhebung 20 etwa orthogonal in die Druckseite 8 über. Die Amplitude A⁻₂ der saugseitigen bzw. saugseitennahen Senke 22 ist größer als die Amplitude A⁻₁ der saugseitenfernen Senke 24.

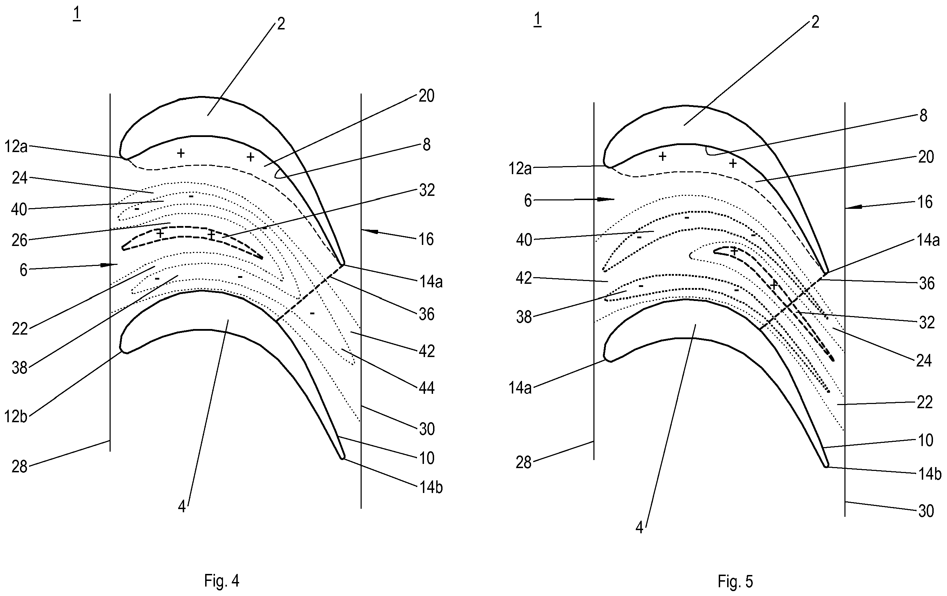

In Figur 4 ist eine in Umfangsrichtung wellenartige Seitenwandkonturierung einer inneren Seitenwandung 16 in einem Schaufelkanal 6 zwischen zwei Schaufelblättern 2, 4 eines Schaufelgitters 1 einer Strömungsmaschine gezeigt, die eine druckseitige Erhebung 20, eine mittlere Erhebung 32 und zwei Senken 22, 24 hat, die in eine hintere gemeinsame Senke 42 übergehen.

Die druckseitige Erhebung 20 erstreckt sich entlang einer Druckseite 8 des Schaufelblattes 2 von einer Vorderkante 12a des Schaufelblattes 2 bis zu dessen Hinterkante 14a.

Die mittlere Erhebung 32 ist in etwa mittig zwischen den Schaufelblättern 2, 4 positioniert. Sie erstreckt sich in etwa von einer axialen Position der Vorderkanten 12a, 12b der Schaufelblätter 2, 4 bis zu einer axialen Position, die etwa 60% einer axialen Schaufelbreite entspricht.

Die Senken 22, 24 sind seitlich der mittleren Erhebung 32 angeordnet und jeweils über einen nicht-konturierten Flächenabschnitt 26 von dieser beabstandet. Ihre Breiten sind in Umfangsrichtung in etwa gleich. Die zwischen der druckseitigen Erhebung 20 und der mittleren Erhebung 32 angeordnete druckseitige Senke 24 ist zudem über einen nicht-konturierten Flächenabschnitt 26 von der druckseitigen Erhebung 20 beabstandet. Ebenso ist die zwischen dem Schaufelblatt 4 und der mittlere Erhebung 32 angeordnete saugseitige Senke 22 über einen nicht-konturierten Flächenabschnitt 26 von der druckseitigen Erhebung 20 beabstandet.

Die Senken 22, 24 erstreckten sich vom vorderen Seitenwandrand 28 der Seitenwandung 16 und bilden stromabwärts der mittleren Erhebung 32 die gemeinsame Senke 42, die sich bis zum hinteren Seitenwandrand 30 der Seitenwandung 16 erstreckt. Ihre tiefsten Abschnitte 38, 40 erstrecken sich in etwa von der axialen Position der Vorderkanten 12a, 12b und sind im Bereich einer Engstelle 36 zwischen den Schaufelblättern 2, 4 zu einem tiefsten Abschnitt 44 der gemeinsamen Senke 42 zusammengeführt.

Um den Abströmwinkel in Seitenwandnähe positiv zu beeinflussen, sind die mittleren Erhebung 32 und die gemeinsame Senke 42 hinter der Engstelle 36 normal zu dieser, d.h. in einem Winkel von 85° bis 95°, orientiert.

In Figur 5 ist eine in Umfangsrichtung wellenartige Seitenwandkonturierung einer inneren Seitenwandung 16 in einem Schaufelkanal 6 zwischen zwei Schaufelblättern 2, 4 eines Schaufelgitters 1 einer Strömungsmaschine gezeigt, die eine druckseitige Erhebung 20, eine mittleren Erhebung 32 und eine Senke 42 hat, die sich stromabwärts in zwei Senken 22, 24 unterteilt. Das Teilen einer vorderen quasi gemeinsamen Senke 42 in zwei hintere einzelne Senken 22, 24 kann Vorteile in Kombination mit einer günstigen Beeinflussung der Hauptströmung über einen hinteren Seitenwandrand 30 der Seitenwandung 16 bringen.

Die druckseitige Erhebung 20 erstreckt sich entlang einer Druckseite 8 des Schaufelblattes 2 von einer Vorderkante 12a des Schaufelblattes 2 bis zu dessen Hinterkante 14a.

Die mittleren Erhebung 32 ist in etwa mittig zwischen den Schaufelblättern 2, 4 positioniert. Sie erstreckt sich in etwa in einem Bereich zwischen 50% und 100% einer axialen Schaufelbreite.

Somit erstreckt sich die mittlere Erhebung 32 in etwa von einem axialen mittleren Schaufelkanalbereich bis zur axialen Position der Hinterkanten 14a, 14b der Schaufelblätter 2, 4.

Die Senke 42 erstreckt sich von einem vorderen Seitenwandrand 28 der Seitenwandung 16 bis zur mittleren Erhebung 32. Die mittleren Erhebung 32 teilt die Senke 42 in zwei einzelne, seitlich von ihr verlaufenden Senken 22, 24, die beide bis zur hinteren Körperkante 30 der Seitenwandung 16 verlaufen. Wie in Figur 5 gezeigt, haben die beiden Senken 22, 24 in Umfangsrichtung eine in etwa gleiche Breite. Die Senke 42 hat zwei tiefste Abschnitte 38, 40, die in Umfangsrichtung voneinander beabstandet sind und jeweils einzeln in die Senken 22, 24 bis zu einer axialen Position der Hinterkanten 14a, 14b weiterlaufen.

Um den Abströmwinkel in Seitenwandnähe positiv zu beeinflussen, sind die mittleren Erhebung 32 und die Senken 22, 24 hinter einer Engstelle 36 zwischen den Schaufelblättern 2, 4 normal zu dieser, d.h. in einem Winkel von 85° bis 95°, orientiert.

Wie bereits zu Figur 1 erwähnt, beziehen sich bei sämtlichen Ausführungsbeispielen die Erhebungen 20, 20', 32, 32' und die Senken 22, 22', 24, 24', 42 jeweils auf einem nicht-konturierten Flächenabschnitt 26 der inneren Seitenwandung. Die Erhebungen 20, 20', 32, 32' erstrecken sich vom nicht-konturierten Flächenabschnitt 26 radial nach außen und stellen somit eine Kanaleinschnürung dar. Die Senken 22, 22', 24, 24', 38, 42 erstrecken sich vom nicht-konturierten Flächenabschnitt 26 radial nach innen und stellen somit eine Kanalerweiterung dar.

Zudem können die Erhebungen 20, 20', 32, 32' und die Senken 22, 22', 24, 24', 42, unterschiedliche oder gleiche Amplituden in Umfangsrichtung und in Strömungsrichtung haben. Die Amplituden der Erhebungen 20, 20', 32, 32' und die Amplituden Senken 22, 22', 24, 24', 42 betragen bevorzugterweise maximal 30% einer Schaufelteilung.

Ebenso kann die Breite der Erhebungen 20, 20', 32, 32' und die Breite der Senken 22, 22', 24, 24', 42 in Umfangsrichtung und in Längsrichtung jeweils variieren.

Zudem können die Krümmungsradien der Welligkeit der Seitenwandkonturierung bzw. Seitenwandkonturierungen in Umfangsrichtung variieren. So kann eine Erhebung 20, 20', 32, 32' einen deutlich kleineren Krümmungsradius als eine benachbarte Senke 22, 22', 24, 24', 42 aufweisen.

Offenbart ist ein Schaufelgitter einer Strömungsmaschine, dessen zumindest eine Seitenwandung in Umfangsrichtung wellenartig ausgebildet ist und zumindest zwei Erhebungen mit zumindest einer Senke oder zumindest zwei Senken mit zumindest einer Erhebung aufweist, sowie eine Strömungsmaschine mit einem derartigen Schaufelgitter.

### Bezugszeichenliste

- 1: Schaufelgitter
- 2: Schaufelblatt
- 4: Schaufelblatt
- 6: Schaufelkanal
- 8: Druckseite
- 10: Saugseite
- 12a, b: Vorderkante
- 14a, b: Hinterkante
- 16: innere Seitenwandung
- 18: äußere Seitenwandung
- 20, 20': druckseitige Erhebung
- 22, 22': Senke
- 24,24': Senke
- 26: nicht-konturierter Flächenabschnitt
- 28: vorderer Seitenwandrand
- 30: hinterer Seitenwandrand
- 32, 32': Erhebung
- 36: Engstelle
- 38: tiefster Abschnitt
- 40: tiefster Abschnitt
- 42: gemeinsame Senke
- 44: tiefster Abschnitt

## Patentansprüche

1. Schaufelgitter (1) einer Strömungsmaschine, mit einer Vielzahl von Schaufelkanälen (6), die in Umfangsrichtung jeweils von einer Druckseite (8) eines Schaufelblattes (2) und von einer gegenüberliegenden Saugseite (10) eines benachbarten Schaufelblattes (4) begrenzt sind und die in Radialrichtung jeweils von zwei gegenüberliegenden Seitenwandungen (16, 18) begrenzt sind, wobei zumindest jeweils eine Seitenwandung (16) der Schaufelkanäle (6) mit einer Seitenwandkonturierung versehen ist, wobei die Seitenwandkonturierung in Umfangsrichtung wellenartig ist und zumindest zwei Erhebungen (20, 20', 32, 32') und zumindest eine Senke (22, 22', 24, 24', 42) oder zumindest zwei Senken (22, 24, 42) und zumindest eine Erhebung (20, 32) aufweist, wobei die Amplituden der Erhebungen (20, 20', 32, 32') untereinander oder die Amplituden der Senke (22, 24, 42) untereinander unterschiedlich sind;
**dadurch gekennzeichnet, dass** eine saugseitennahen Senke (22) eine größere Amplitude (A⁻₂) als eine saugseitenferne Senke (24) hat.

2. Schaufelgitter nach einem der vorhergehenden Ansprüche, wobei die Seitenwandkonturierung bis zum stromabwärtigen Seitenwandrand (30) geführt ist.

3. Schaufelgitter nach Anspruch 1 oder 2, wobei die Erhebungen (20, 20', 32, 32') und die zumindest eine Senke (22, 24, 42) oder die Senken (22, 24, 42) und die zumindest eine Erhebung (20, 20', 32, 32') in Umfangsrichtung variierende Breiten und/oder in Strömungsrichtung unterschiedliche Längen haben.

4. Schaufelgitter nach Anspruch 1, 2 oder 3, wobei die Erhebungen (20, 20', 32, 32') und die zumindest eine Senke (22, 22', 24, 24', 42) oder die Senken (22, 22', 24, 24', 42) und die zumindest eine Erhebung (20, 20', 32, 32') stromabwärts einer Engstelle (36) des Schaufelkanals (6) normal zu diesem ausgeführt sind.

5. Schaufelgitter nach einem der vorhergehenden Ansprüche, wobei mehrere Senken (22, 24) in eine Senke (42) übergehen.

6. Schaufelgitter nach einem der vorhergehenden Ansprüche, wobei die Erhebungen (20, 20', 32, 32') und die zumindest eine Senke (22, 22', 24, 24', 42) oder die Senken (22, 22', 24, 24', 42) und die zumindest eine Erhebung (20, 20', 32, 32') in Strömungsrichtung variierende Amplituden haben.

7. Schaufelgitter nach einem der vorhergehenden Ansprüche, wobei eine druckseitennahen Erhebung (20, 20') eine größere Amplitude (A⁺₂) als eine druckseitenfeme Erhebung (32, 32') hat.

8. Schaufelgitter nach einem der vorhergehenden Ansprüche, wobei Krümmungsradien der Seitenwandkonturierung variieren.

9. Strömungsmaschine mit zumindest einem Schaufelgitter (1) nach einem der vorhergehenden Ansprüche.

## Claims

1. Blade cascade (1) of a turbomachine, comprising a plurality of blade channels (6) which are each delimited in the peripheral direction by a pressure side (8) of an airfoil (2) and by an opposite suction side (10) of an adjacent airfoil (4), and are each delimited in the radial direction by two opposing lateral walls (16, 18), at least one lateral wall (16) of each of the blade channels (6) being provided with a lateral wall contouring, the lateral wall contouring being wave-like in the peripheral direction and having at least two elevations (20, 20', 32, 32') and at least one depression (22, 22', 24, 24', 42), or at least two depressions (22, 24, 42) and at least one elevation (20, 32), the amplitudes of the elevations (20, 20', 32, 32') being different from one another, or the amplitudes of the depression (22, 24, 42) being different from one another; **characterized in that** a depression (22) which is close to a suction side has a larger amplitude (A⁻₂) than a depression (24) which is remote from a suction side.

2. Blade cascade according to any of the preceding claims, wherein the lateral wall contouring extends as far as the downstream edge (30) of the lateral wall.

3. Blade cascade according to either claim 1 or claim 2, wherein the elevations (20, 20', 32, 32') and the at least one depression (22, 24, 42) or the depressions (22, 24, 42) and the at least one elevation (20, 20', 32, 32') have widths which vary in the peripheral direction and/or have different lengths in the direction of flow.

4. Blade cascade according to claim 1, 2 or 3, wherein the elevations (20, 20', 32, 32') and the at least one depression (22, 22', 24, 24', 42) or the depressions (22, 22', 24, 24', 42) and the at least one elevation (20, 20', 32, 32') are normal to a constriction (36) of the blade channel (6) downstream of said constriction.

5. Blade cascade according to any of the preceding claims, wherein a plurality of depressions (22, 24) transition into one depression (42).

6. Blade cascade according to any of the preceding claims, wherein the elevations (20, 20', 32, 32') and the at least one depression (22, 22', 24, 24', 42) or the depressions (22, 22', 24, 24', 42) and the at least one elevation (20, 20', 32, 32') have amplitudes which vary in the direction of flow.

7. Blade cascade according to any of the preceding claims, wherein an elevation (20, 20') which is close to a pressure side has a greater amplitude (A⁺₂) than an elevation (32, 32') which is remote from a pressure side.

8. Blade cascade according to any of the preceding claims, wherein radii of curvature of the lateral wall contouring vary.

9. Turbomachine comprising at least one blade cascade (1) according to any of the preceding claims.

## Revendications

1. Grille d'aubes (1) de turbomachine comportant une pluralité de canaux d'aubes (6) délimités dans la direction circonférentielle par un côté pression (8) d'une aube (2) et par un côté aspiration opposé (10) d'une aube adjacente (4), et dont chacun est délimité dans la direction radiale par deux parois latérales opposées (16, 18), au moins une paroi latérale (16) des canaux d'aube (6) étant munie d'un contour de paroi latérale, le contour de paroi latérale ayant la forme d'une onde dans la direction circonférentielle et ayant au moins deux élévations (20, 20', 32, 32') et au moins une dépression (22, 22', 24, 24', 42) ou au moins deux dépressions (22, 24, 42) et au moins une élévation (20, 32), les amplitudes des élévations (20, 20', 32, 32') entre elles ou les amplitudes de la dépression (22, 24, 42) mutuellement différentes ;
**caractérisé en ce qu'**une dépression (22) proche du côté aspiration a une amplitude (A⁻₂) plus grande qu'une dépression (24) éloignée du côté aspiration.

2. Grille d'aubes selon l'une des revendications précédentes, dans laquelle le contour de paroi latérale est guidé jusqu'au bord de la paroi latérale aval (30).

3. Grille d'aubes selon la revendication 1 ou 2, dans laquelle les élévations (20, 20', 32, 32') et l'au moins une dépression (22, 24, 42) ou les dépressions (22, 24, 42) et l'au moins une élévation (20, 20', 32, 32') ont des largeurs variant dans la direction périphérique et/ou des longueurs variant dans la direction de l'écoulement.

4. Grille d'aubes selon la revendication 1, 2 ou 3, dans laquelle les élévations (20, 20', 32, 32') et l'au moins une dépression (22, 22', 24, 24', 42) ou les dépressions (22, 22', 24, 24', 42) et l'au moins une élévation (20, 20', 32, 32') sont réalisées en aval d'un point étroit (36) du canal d'aube (6) perpendiculaire à celui-ci.

5. Grille d'aubes selon l'une des revendications précédentes, dans laquelle plusieurs dépressions (22, 24) fusionnent en une seule dépression (42).

6. Grille d'aubes selon l'une des revendications précédentes, dans laquelle les élévations (20, 20', 32, 32') et l'au moins une dépression (22, 22', 24, 24', 42) ou les dépressions (22, 22', 24, 24', 42) et l'au moins une élévation (20, 20', 32, 32') ont des amplitudes variant dans la direction de l'écoulement.

7. Grille d'aubes selon l'une des revendications précédentes, dans laquelle une élévation (20, 20') proche du côté pression a une amplitude (A⁺₂) supérieure à une élévation (32, 32') éloignée du côté pression.

8. Grille d'aubes selon l'une des revendications précédentes, dans laquelle les rayons de courbure du contour de paroi latérale varient.

9. Turbomachine comportant au moins une grille d'aubes (1) selon l'une des revendications précédentes.
